# EUROPÄISCHE PATENTANMELDUNG

(11) **EP 4 818 827 A1**
(43) Veröffentlichungstag der Anmeldung: **07.10.2026**
(21) Anmeldenummer: 26168630.7
(22) Anmeldetag: 27.03.2026
(51) Int. Cl.: G05B 9/03, B64C 13/28, B64C 13/42, B64C 13/50, B64C 25/22, B64C 25/24

(54) **ANSTEUERVORRICHTUNG FÜR EINEN SICHERHEITSKRITISCHEN AKTUATOR**

(30) Priorität: 04.04.2025 DE 102025113318
(71) Anmelder: Liebherr-Aerospace Lindenberg GmbH, 88161 Lindenberg (DE)
(72) Erfinder: THIERER, Sven, 88171 Weiler-Simmerberg (DE); LANZ, Thomas, 88099 Neukirch (DE); ROOS, Leon, 88161 Lindenberg (DE)
(74) Vertreter: Lorenz Seidler Gossel Part. mbB

(57) **Zusammenfassung**

Die Erfindung betrifft eine Ansteuervorrichtung für einen sicherheitskritischen Aktuator (2) mit zwei Ansteuereinheiten (3, 4) und einer Aktivierungseinheit (5). Beide Ansteuereinheiten können jeweils ein Steuersignal (3A, 4A) für den Aktuator sowie ein Überwachungssignal (3B, 4B) auf Basis eines zurückgeführten Aktuator-Zustandssignals (2A) erzeugen. Die Aktivierungseinheit schaltet eine der beiden Ansteuereinheiten in einen Steuerzustand, in dem ihr Steuersignal an den Aktuator weitergegeben wird, während die andere in einem Überwachungszustand verbleibt, in dem ihr Steuersignal nicht weitergereicht wird. Dabei wertet die Aktivierungseinheit die Überwachungssignale beider Einheiten aus, um zu entscheiden, welche Einheit den Steuerzustand erhält. Zusätzlich empfängt sie ein Zuweisungssignal (7A) von einer externen Quelle (7). Ein Wechsel des Steuerzustands von der aktiven auf die überwachende Ansteuereinheit erfolgt nur dann, wenn sowohl deren Überwachungssignal als auch das externe Zuweisungssignal auf eine Fehlfunktion der aktuell steuernden Einheit hinweisen. Der Zustandswechsel erfolgt ferner nur, wenn auch das Aktuator-Zustandssignal dies zulässt.

## Beschreibung

Die vorliegende Erfindung betrifft eine Ansteuervorrichtung für einen sicherheitskritischen Aktuator, wie er insbesondere im Bereich der Luftfahrt Verwendung findet.

In modernen Flugzeugen werden zahlreiche Aktuatoren verbaut, etwa zur Betätigung von Hochauftriebssystemen, zum Verstellen primärer Flugsteuerungsflächen oder zum Ausfahren des Flugzeugfahrwerks. Diese Aktuatoren spielen eine zentrale Rolle in der sicheren Steuerung und Stabilisierung eines Luftfahrzeugs, sodass ein Ausfall oder eine falsche Ansteuerung zu schwerwiegenden Beeinträchtigungen im Flugbetrieb führen kann, bis hin zu potenziellen Gefährdungen für Passagiere und Besatzung.

Um solchen Risiken vorzubeugen, müssen die Ansteuervorrichtungen für sicherheitskritische Aktuatoren hohen Sicherheitsanforderungen genügen. Insbesondere ist es essenziell, dass mindestens zwei voneinander unabhängige Ansteuereinheiten vorhanden sind, um eine sichere Ansteuerung auch bei Ausfall einer der beiden Ansteuereinheiten gewährleisten zu können. Eine redundante Auslegung mit beispielsweise zwei Kanälen (wobei jeweils ein Kanal über eine jeweilige Ansteuereinheit geführt ist) stellt sicher, dass beim Ausfall oder der Fehlfunktion einer Ansteuereinheit die jeweils andere Einheit weiterhin die Steuerung übernehmen kann. Dieses Prinzip dient vorrangig dem Ziel, ein Höchstmaß an Betriebs- und Ausfallsicherheit zu erreichen, wie es in der Luftfahrt aber auch in anderen fehlerintoleranten Umgebungen von den einschlägigen Zulassungsbehörden vorgegeben wird.

Der Stand der Technik sieht häufig eine sogenannte 2×2 dissimilare Kanalkonfiguration vor, wobei vier unabhängige Kanäle (mit insgesamt auch vier unabhängigen Ansteuereinheiten) eingebunden sind.

Die vier Kanäle werden in zwei Kanalpaare unterteilt, sodass ein Kanal eines jeden Paars einen Steuerzustand und der jeweils andere Kanal einen Überwachungszustand einnehmen kann. Wird dann durch einen im Überwachungszustand befindlichen Kanal festgestellt, dass der von ihm überwachte im Steuerzustand befindliche Kanal möglicherweise fehlerhaft agiert, wird auf das andere Kanalpaar umgeschaltet. Wie ausgeführt, übernehmen die Kanäle des Kanalpaares unterschiedliche Aufgaben in Form von Steuerung und Überwachung.

Zwar werden hierdurch hohe Sicherheitsstandards erreicht, jedoch ist diese Herangehensweise mit verschiedenen Nachteilen verbunden. So erfordert eine 2×2-Architektur mit ihren insgesamt vier Kanälen (und demzufolge auch vier Ansteuereinheiten) viel Platz, was insbesondere in beengten Flugzeugsystemen eine erhebliche Herausforderung darstellt. Auch das hohe Gewicht, der hohe Energieverbrauch und die Kosten für erforderliche Hardware-Komponenten wirken sich negativ aus. Darüber hinaus führt ein Fehler in einem der Kanäle zu einer unmittelbaren Nichtberücksichtigung des als fehlerhaft angesehenen Kanalpaares, wobei dies auch der Fall ist, wenn ein im Überwachungszustand befindlicher Kanal fehlerhafterweise den Fehlerzustand meldet und es demzufolge zu einer nicht erforderlichen Abschaltung des Kanalpaares kommt.

Die vorliegende Erfindung überwindet diese Problematik oder mildert sie zumindest ab, indem sie durch die Ansteuervorrichtung nach dem unabhängigen Anspruch 1 eine kompaktere, energieeffizientere und kostengünstigere Lösung anbietet, die gleichzeitig ein hohes Maß an Betriebs- und Ausfallsicherheit gewährleistet.

Weitere vorteilhafte Ausgestaltungen sind dabei in den abhängigen Ansprüchen niedergeschrieben.

Die erfindungsgemäße Ansteuervorrichtung für einen sicherheitskritischen Aktuator umfasst eine erste Ansteuereinheit, die dazu ausgelegt ist, ein Steuersignal zum Ansteuern des Aktuators und ein Überwachungssignal auf Grundlage von mindestens einem an die erste Ansteuereinheit zurückgeführten Zustandssignal des Aktuators auszugeben, eine zweite Ansteuereinheit, die dazu ausgelegt ist, ein Steuersignal zum Ansteuern des Aktuators und ein Überwachungssignal auf Grundlage von mindestens einem an die zweite Ansteuereinheit zurückgeführten Zustandssignal des Aktuators auszugeben, und eine Aktivierungseinheit, die dazu ausgelegt ist, entweder die erste Ansteuereinheit oder die zweite Ansteuereinheit in einen Steuerzustand (CON), in dem das ausgegebene Steuersignal an den Aktuator weitergereicht wird, und die andere Ansteuereinheit in einen Überwachungszustand (MON) zu versetzen, in dem das ausgegebene Steuersignal nicht an den Aktuator weitergereicht wird, wobei die Aktivierungseinheit dazu ausgelegt ist, das Überwachungssignal der ersten Ansteuereinheit und das Überwachungssignal der zweiten Ansteuereinheit zu empfangen und auszuwerten, um in Abhängigkeit davon den Steuerzustand der ersten Ansteuereinheit oder der zweiten Ansteuereinheit zuzuweisen. Die Vorrichtung ist dadurch gekennzeichnet, dass die Aktivierungseinheit einen Signaleingang zum Entgegennehmen von mindestens einem Zuweisungssignal mindestens einer externen Quelle aufweist, wobei die Aktivierungseinheit dazu ausgelegt ist, den Steuerzustand von der im Steuerzustand befindlichen Ansteuereinheit auf die im Überwachungszustand befindliche Ansteuereinheit zu wechseln, wenn sowohl das Überwachungssignal der im Überwachungszustand befindlichen Ansteuereinheit als auch das Zuweisungssignal der externen Quelle auf eine Fehlfunktion der im Steuerzustand befindlichen Ansteuereinheit hinweisen.

Vorzugsweise gibt es zwei Zuweisungssignale von mindestens einer externen Quelle.

Dieser Anspruch legt eine duale Architektur fest, in der zwei Ansteuereinheiten wahlweise in einem Steuerzustand (CON) oder in einem Überwachungszustand (MON) betrieben werden können. In der Regel befindet sich eine der beiden Ansteuereinheiten in dem Steuerzustand (CON) und die andere in dem Überwachungszustand (MON). Das Überwachungssignal der einen Einheit verhindert ein vorschnelles Deaktivieren der aktuell steuernden Einheit, da erst bei bestätigter Fehlfunktion über das Zuweisungssignal der externen Quelle umgeschaltet wird. Dadurch wird eine höhere Zuverlässigkeit bei sicherheitskritischen Anwendungen erreicht, da nicht bereits allein ein signalisierter Fehlzustand der Ansteuereinheit im Überwachungszustand oder das entsprechende Signal der externen Quelle eine entsprechende Konsequenz, bspw. den Wechsel der im Steuerzustand befindlichen Ansteuereinheit, nach sich zieht. Hierfür ist immer eine übereinstimmende Signalisierung der Ansteuereinheit im Überwachungszustand sowie der externen Quelle erforderlich, die beide auf eine Fehlfunktion der im Steuerzustand befindlichen Ansteuereinheit schließen. Im Ergebnis gewährleistet die notwendige Übereinstimmung in den beiden auf eine Fehlfunktion hinweisenden Signalen, dass ein Wechsel auf die zuvor überwachende Einheit nur dann ausgelöst wird, wenn externe Quelle und Überwachung sich einig sind.

Vorteilhaft hieran ist, dass im Gegensatz zum Stand der Technik nun nicht mehr insgesamt vier Ansteuereinheiten (im Fachjargon auch genannt: Lanes) erforderlich sind, sondern lediglich zwei Ansteuereinheiten sowie die Aktivierungseinheit, die dazu in der Lage ist, das Zuweisungssignal der externen Quelle entgegenzunehmen

Nach einer optionalen Modifikation der vorliegenden Erfindung kann vorgesehen sein, dass die erste Ansteuereinheit und die zweite Ansteuereinheit zueinander redundant ausgebildet sind, insbesondere zueinander inhomogen redundant oder homogen redundant ausgebildet sind, und/oder jeweils einen Signaleingang zum Entgegennehmen eines Aktuator-Stellsignals von der externen Quelle aufweisen.

Jede der beiden Ansteuereinheiten erhält ein Aktuator-Stellsignal über einen Signaleingang, das in der Regel von der externen Quelle zur Verfügung gestellt wird. Die jeweilige Ansteuereinheit, die sich im Steuerzustand befindet, gibt dann das auf dem Aktuator-Stellsignal basierende Steuersignal an den zu steuernden Aktuator weiter. Ferner kann auch vorgesehen sein, dass die im Überwachungszustand befindliche Ansteuereinheit ebenfalls ein auf dem Aktuator-Stellsignal basierendes Steuersignal erzeugt und ausgibt, die Aktivierungseinheit sorgt aber dafür, dass das von der im Überwachungszustand befindlichen Ansteuereinheit ausgegebene Steuersignal den Aktuator nicht erreicht.

In anderen Worten kann also vorgesehen sein, dass jede der beiden Ansteuereinheiten unabhängig davon, ob sie sich in einem Steuerzustand oder einem Überwachungszustand befindet, identisch arbeitet. Schließlich nimmt eine Ansteuereinheit nicht wahr, ob sie sich in einem Steuerzustand oder einem Überwachungszustand befindet, da die Entscheidung hierüber die Aktivierungseinheit trifft, indem sie die von einer jeweiligen Ansteuereinheit ausgegebenen Steuersignale an den Aktuator weiterleitet oder nicht. Auch entscheidet die Aktivierungseinheit darüber, ob ein von einer jeweiligen Ansteuereinheit an sie übermitteltes Überwachungssignal für einen Wechsel der Zustandszuweisungen herangezogen wird oder nicht. So ist vorteilhafterweise vorgesehen, dass die Aktivierungseinheit einen Überwachungszustand einer im Steuerzustand befindlichen Ansteuereinheit nicht heranzieht, sondern dies nur für das Überwachungssignal der im Überwachungszustand befindlichen Ansteuereinheit tut.

Durch die redundante Auslegung beider Ansteuereinheiten wird eine zusätzliche Sicherheitsebene geschaffen, weil zumindest eine funktionierende Einheit die Steuerung übernehmen kann. Ob die Redundanz homogen oder inhomogen ist, ermöglicht unterschiedliche technische Umsetzungsmöglichkeiten, was Flexibilität in Design und Kosten bietet. Zudem ist eine inhomogene Ausgestaltung der Redundanz von Vorteil, was die Ausfallsicherheit betrifft, da systembedingte Fehler dann mit geringerer Wahrscheinlichkeit zu einem gleichzeitigen Ausfall beider Ansteuereinheiten führen.

Nach einer optionalen Modifikation der vorliegenden Erfindung kann vorhergesehen sein, dass die Aktivierungseinheit separat zu den beiden Ansteuereinheiten ausgebildet ist oder integriert in eine oder beide der Ansteuereinheiten ausgebildet ist.

Die Anforderungen kann je nach Anforderungen entweder als eigenständige Baugruppe oder integriert in einer (oder beiden) der Ansteuereinheiten ausgeführt werden. Dies schafft Spielraum in der Systemarchitektur, sodass Hersteller je nach Platz-, Kosten- oder Sicherheitsaspekten die passende Lösung wählen können. Damit ist eine flexible Anpassung an unterschiedliche Flugzeugtypen oder sicherheitskritische Anwendungen möglich.

Nach einer weiteren optionalen Modifikation der vorliegenden Erfindung kann vorgesehen sein, dass die Aktivierungseinheit dazu ausgelegt ist, in Abhängigkeit des Zuweisungssignals eine initiale Zuweisung von Steuerzustand und Überwachungszustand an die erste Ansteuereinheit und die zweite Ansteuereinheit auszuführen.

Hieraus ergibt sich, dass eine initiale Zuordnung von Steuerzustand und Überwachungszustand durch das Zuweisungssignal erfolgt. Dadurch kann bereits beim Systemstart eindeutig festgelegt werden, welche Ansteuereinheit das Steuersignal ausgibt und welche überwacht. Das reduziert Fehlkonfigurationen und macht den Startvorgang effizienter und sicherer. So wird eine eindeutige Grundkonfiguration geschaffen, auf der das System während des Betriebs aufbauen kann. Weiter kann dabei vorgesehen sein, dass die externe Quelle die initiale Zuweisung so vornimmt, dass die beiden Ansteuereinheiten jeweils abwechselnd den Steuerzustand und den Überwachungszustand erhalten, da dann die Wahrscheinlichkeit eines schlafenden Fehlers verringert wird, in welchem die im Überwachungszustand befindliche Ansteuereinheit unentdeckt falsche Steuersignale ausgibt.

Nach einer weiteren vorteilhaften Fortbildung der vorliegenden Erfindung kann vorgesehen sein, dass die Aktivierungseinheit nach einem Wechsel des Steuerzustands von der im Steuerzustand befindlichen Ansteuereinheit auf die im Überwachungszustand befindliche Ansteuereinheit, dazu ausgelegt ist, die Ansteuereinheit, der der Steuerzustand entzogen worden ist, in einen Fehlerzustand (FAIL) zu versetzen, vorzugsweise wobei das Überwachungssignal einer im Fehlerzustand befindlichen Ansteuereinheit von der Aktivierungseinheit keine Berücksichtigung beim Zuweisen des Steuerzustands findet.

Hier wird der automatische Übergang einer zuvor steuernden Ansteuereinheit in einen Fehlerzustand (FAIL) beschrieben, sobald die andere Einheit den Steuerzustand übernimmt. Dies hilft dabei, fehlerhafte Einheiten konsequent von relevanten Steuer- und Überwachungsprozessen auszuschließen. Dadurch kann eine defekte Ansteuereinheit nicht länger falsche Signale senden und die Systemstabilität gefährden. Die Überwachungssignale einer bereits ausgefallenen Einheit bleiben vorteilhafterweise unberücksichtigt, was unnötige Fehlalarme verhindert.

Nach einer weiteren vorteilhaften Modifikation der vorliegenden Erfindung kann vorgesehen sein, dass die Aktivierungseinheit eine erste Schalteinheit, die dazu ausgelegt ist, eine Signalverbindung zwischen der ersten Ansteuereinheit und dem Aktuator (oder einem entsprechenden Signalanschluss für den Aktuator) zu erstellen oder zu unterbrechen, und eine zweite Schalteinheit aufweist, die dazu ausgelegt ist, eine Signalverbindung zwischen der zweiten Ansteuereinheit und dem Aktuator (oder einem entsprechenden Signalanschluss für den Aktuator) zu erstellen oder zu unterbrechen, insbesondere wobei die erste Schalteinheit und die zweite Schalteinheit jeweils als ein durch die Aktivierungseinheit betätigbarer Schalter, Relais oder dergleichen ausgestaltet ist.

Vorteilhafterweise ist dabei vorgesehen, dass die beiden vorhandenen Schalteinheiten immer einen zueinander inversen Schaltzustand aufweisen, sodass lediglich eine der beiden Schalteinheiten eine Verbindung zu dem Aktuator herstellt und die andere eine Verbindung zu dem Aktuator unterbricht.

Mit einer ersten und zweiten Schalteinheit, die Signalverbindungen von der jeweiligen Ansteuereinheit zu dem Aktuator steuern, lassen sich die Leitungswege flexibel öffnen oder schließen. Dadurch kann die Aktivierungseinheit das Übermitteln von Steuersignalen an den Aktuator gezielt steuern. Dies erhöht die Ausfallsicherheit, denn nur die jeweils freigegebene Lane wird physisch an den Aktuator durchgeschaltet.

Nach einer weiteren optionalen Fortbildung der vorliegenden Erfindung kann vorgesehen sein, dass der sicherheitskritische Aktuator ein Aktuator in einem Luftfahrzeug ist, und insbesondere ein Hochauftriebssystem, ein Aktuator zum Stellen einer primären Flugsteuerungsfläche, ein Flugsteuerungselement oder ein Luftfahrzeugfahrwerk eines Luftfahrzeugs ist.

Die Nennung eines Aktuators im Luftfahrzeug, etwa für Hochauftriebssysteme, primäre Flugsteuerungsflächen oder Fahrwerke, unterstreicht die sicherheitskritische Relevanz der Vorrichtung, die insbesondere für ein Flugfahrzeug von herausragender Bedeutung ist. Gerade in diesem Bereich sind Zuverlässigkeit und Fehlertoleranz besonders wichtig. Dadurch stellt der Anspruch die Eignung für hochsensible Anwendungen in der Luftfahrtindustrie heraus, was die wirtschaftliche und technische Bedeutung der Erfindung steigert. Selbstverständlich kann die vorliegende Anwendung auch in beliebigen anderen Bereichen von großem Nutzen sein, bspw. im Automotivebereich oder überall da, wo sicherheitskritische Aktuatoren zum Einsatz kommen.

Die Erfindung betrifft darüber hinaus ein System zum Ansteuern eines sicherheitskritischen Aktuators, das eine Vorrichtung nach einem der vorhergehend diskutierten Aspekte, und eine externe Quelle, die über den Signaleingang mit der Aktivierungseinheit gekoppelt ist, vorzugsweise wobei die externe Quelle ein Steuercomputer ist.

Durch die Ergänzung der Vorrichtung um die externe Quelle wird ein vollständiges System gebildet, in dem die Aktivierungseinheit und die Ansteuereinheiten im Zusammenspiel funktionieren. Die externe Quelle ist direkt mit dem Signaleingang gekoppelt und erhält damit eine zentrale Rolle bei der Zuweisung von CON- und MON-Zuständen. Das Zusammenspiel von Vorrichtung und externer Quelle steigert die Gesamteffizienz und ermöglicht eine kohärente Steuerung aus einer übergeordneten Instanz heraus.

Ferner kann dabei vorteilhafterweise vorgesehen sein, dass die externe Quelle dazu ausgelegt ist, ein Aktuator-Stellsignal zum Ansteuern des Aktuators an die Vorrichtung zu übertragen, vorzugsweise wobei sowohl die erste Ansteuereinheit wie auch die zweite Ansteuereinheit das identische Aktuator-Stellsignal zum Ausgeben eines darauf basierenden Steuersignals erhält.

Durch das Übermitteln eines Aktuator-Stellsignals an beide Ansteuereinheiten kann jede Lane parallel das (im fehlerlosen Zustand) identische oder zumindest gleichwirkende Steuersignal aufbereiten. Dies erhöht die Ausfallsicherheit, da im Fehlerfall die bisher überwachende Einheit das Steuersignal ohne Latenz übernehmen kann. Das parallele Empfangen des Aktuator-Stellsignals sorgt dafür, dass keine Zeit verlorengeht, um neue Befehle abzurufen, was in zeitkritischen Anwendungssituationen sicherheitsrelevanter sein könnte. Dadurch ist das System reaktionsschneller als ein System, bei welchem das Empfangen und/oder Generieren von einem Steuersignal auf Grundlage des Aktuator-Steuersignals erst dann ausgeführt wird, wenn die zugrundeliegende Ansteuereinheit in den Steuerzustand versetzt wird.

Darüber hinaus kann vorteilhafterweise vorgesehen sein, dass die externe Quelle dazu ausgelegt ist, ein Zuweisungssignal über den Signaleingang an die Aktivierungseinheit zu senden, um der ersten Ansteuereinheit und der zweiten Ansteuereinheit den Steuerzustand (CON) bzw. den Überwachungszustand (MON) initial zuzuweisen.

Die Möglichkeit, der ersten und zweiten Ansteuereinheit bereits initial den Steuerzustand (CON) beziehungsweise den Überwachungszustand (MON) zuzuweisen, beugt Verwechslungen oder Konflikten beim Systemstart vor. Dies erhöht die Prozesssicherheit und vereinfacht die Inbetriebnahme, weil die externe Quelle zu Beginn eine klare Zuweisung vorgibt. So wird ein widerspruchsfreier Betriebszustand gewährleistet, der die spätere Steuerung stabil hält.

Darüber hinaus kann die externe Quelle dazu ausgelegt sein, bei jeder initialen Zuweisung den Steuerzustand bzw. den Überwachungszustand abwechselnd zwischen den beiden Ansteuereinheiten vorzusehen.

Nach einer weiteren vorteilhaften Modifikation der vorliegenden Erfindung kann vorgesehen sein, dass die externe Quelle dazu ausgelegt ist, über den Signaleingang ein Zuweisungssignal an die Aktivierungseinheit zu senden, das auf eine Fehlfunktion der im Steuerzustand befindlichen Ansteuereinheit hinweist.

Die externe Quelle kann ein Zuweisungssignal senden, das konkret auf eine Fehlfunktion einer gerade steuernden Ansteuereinheit hinweist. Damit wird der Informationsfluss von außen in das System nochmals verstärkt, weil nicht nur interne Überwachungssignale ausgewertet werden. Die Integration des externen Fehlfunktionssignals beschleunigt den möglichen Wechsel auf eine funktionierende Einheit. Somit wird das System noch sicherer, da bei bestätigter Fehlfunktion schneller reagiert werden kann.

Nach einer weiteren vorteilhaften Fortbildung der vorliegenden Erfindung kann vorgesehen sein, dass die Aktivierungseinheit dazu ausgelegt ist, nur dann den Steuerzustand von der im Steuerzustand befindlichen Ansteuereinheit auf die im Überwachungszustand befindliche Ansteuereinheit zu wechseln, wenn sowohl das Überwachungssignal der im Überwachungszustand befindlichen Ansteuereinheit als auch das Zuweisungssignal der externen Quelle auf eine Fehlfunktion der im Steuerzustand befindlichen Ansteuereinheit hinweisen.

Hier wird klargestellt, dass ein Zustandswechsel nur dann erfolgt, wenn beide Parteien (externe Quelle und MON) einen Fehler erkennen. Dies schützt vor einer voreiligen Abschaltung aufgrund einer fehlerhaften Messung oder Störung in nur einer Komponente (als Beispielweise nur der externen Quelle oder nur der Ansteuereinheit, die sich im Überwachungszustand befindet). Dadurch werden unnötige Ausfallzeiten vermieden, und das System bleibt stabil. Diese Absicherung minimiert die Gefahr einer ungewollten Deaktivierung der im Steuerzustand befindlichen Einheit auf Grundlage einer möglicherweise fehlerhaften Indikation auf eine Fehlfunktion der im Steuerzustand befindlichen Ansteuereinheit.

Ferner kann vorgesehen sein, dass die externe Quelle auch dazu ausgelegt ist, mindestens ein Zustandssignal des Aktuators zu erhalten, um auf Grundlage von mindestens einem an die externe Quelle zurückgeführten Zustandssignal des Aktuators eine Fehlfunktion des Aktuators gegenüber einem von der externen Quelle an die Ansteuervorrichtung gegebenen Aktuator-Stellsignal zu erzeugen. Vorzugsweise ist dabei vorgesehen, dass die externe Quelle dazu ausgelegt ist, ein entsprechendes auf eine Fehlfunktion hinweisendes Signal als Zuweisungssignal an die Aktivierungseinheit zu senden.

Nach einer weiteren Fortbildung der vorliegenden Erfindung kann vorgesehen sein, dass die externe Quelle ein Flugsteuercomputer ist, der über einen Kommunikationsbus mit der Ansteuervorrichtung gekoppelt ist.

Die konkrete Angabe, dass die externe Quelle ein Flugsteuercomputer sein kann, verdeutlicht den Anwendungsfall im Bereich Luftfahrt. Die Kopplung über einen Kommunikationsbus zeigt eine etablierte Schnittstellentechnik auf, wodurch sich das System einfach in bestehende Flugzeuginfrastrukturen integrieren lässt. Dies steigert die Praktikabilität und erleichtert Implementierung sowie Zertifizierung. Zudem wird klar, dass das System zu gängigen Avionik-Standards kompatibel ist.

Vorteilhafterweise kann vorgesehen sein, dass das System ferner einen Aktuator umfasst, der dazu ausgelegt ist, ein Steuersignal von einer im Steuerzustand befindlichen Ansteuereinheit zu erhalten und mindestens ein Zustandssignal an sowohl die erste Ansteuereinheit wie auch die zweite Ansteuereinheit zu senden.

Die Einbindung eines Aktuators verdeutlicht den durchgängigen Steuer- und Überwachungsprozess, da derselbe Aktuator sowohl das Steuersignal empfängt als auch ein Zustandssignal zurückmeldet. Dies schafft Transparenz über den tatsächlichen Betriebszustand und erlaubt eine fortlaufende Funktionsüberwachung. Damit lassen sich Probleme frühzeitig erkennen, was zur Reduktion der Ausfallwahrscheinlichkeit führt. Gleichzeitig wird eine durchgängige Datenkette zwischen externem Computer, Ansteuereinheiten und Aktuator etabliert.

Die Erfindung betrifft darüber hinaus ein Luftfahrzeug, insbesondere Flugzeug mit einer Vorrichtung nach einem der vorhergehend diskutierten Aspekte oder einem System nach einem der vorhergehend diskutierten Aspekte.

Die Einbindung in ein Luftfahrzeug ist aufgrund der dort vorherrschenden hohen Anforderungen an die Ausfallsicherheit von Vorteil, die speziell im Bereich von Flugzeugen vorherrschen. Da hier höchste Sicherheits- und Zuverlässigkeitsanforderungen gelten, stellt der Einsatz in einem Luftfahrzeug das hohe Sicherheitsniveau der Vorrichtung heraus.

Weitere Merkmale, Einzelheiten und Vorteile der Erfindung werden anhand der nachfolgenden Figurenbeschreibung ersichtlich. Dabei zeigt:

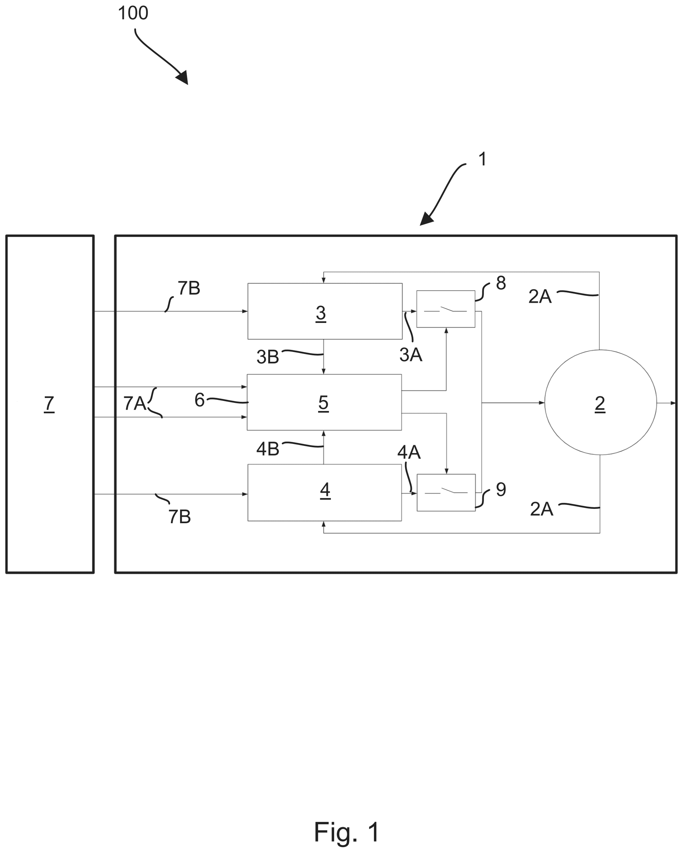

- Fig. 1:: eine schematische Darstellung der vorliegenden Erfindung zusammen mit der externen Quelle und dem Aktuator.

Fig. 1 zeigt eine schematische Darstellung eines Systems 100 zum Ansteuern eines sicherheitskritischen Aktuators 2. Das dargestellte System umfasst dabei eine Vorrichtung 1 zum Ansteuern des Aktuators 2 sowie eine externe Quelle 7 und den Aktuator 2 selbst.

Dargestellt sind zwei Ansteuereinheiten 3, 4, die jeweils dazu in der Lage sind, auf Grundlage eines von der externen Quelle 7 abgegebenen Aktuator-Stellsignals 7A ein jeweiliges Steuersignal 3A, 4A auszugeben, das dazu dient, den Aktuator 2 anzusteuern.

Um sicherzustellen, dass lediglich eines der parallel erzeugten Steuersignale 3A, 4A an den Aktuator 2 gegeben wird, wird mithilfe der Aktivierungseinheit 5 nur eines der beiden parallel erzeugten Ansteuersignale 3A, 4A an den Aktuator 2 gegeben. Hierfür kann die Aktivierungseinheit 5 eine jeweilige Schalteinheit 8, 9 in der Verbindungsleitung zwischen Ansteuereinheit 3, 4 und Aktuator 2 aufweisen. In einer einfachen Ausgestaltung ist die Schalteinheit 8, 9 ein Schalter, der in Abhängigkeit seines Schaltzustands das von der zugehörigen Ansteuereinheit 3, 4 erzeugte Steuersignal an den Aktuator 2 weiterleitet oder von diesem isoliert.

Diejenige Ansteuereinheit 3, 4, deren Steuersignal zum Ansteuern des Aktuators 2 genutzt wird, befindet sich im sogenannten Steuerzustand (auch genannt: CON, für englisch: control). In anderen Worten wird also das Steuersignal, das von der im Steuerzustand befindlichen Ansteuereinheit 3, 4 ausgegeben wird, für das Ansteuern des Aktuators 2 verwendet.

Die andere Ansteuereinheit 3, 4 befindet sich dann typischerweise im sogenannten Überwachungszustand (auch genannt: MON, für englisch: monitor), und trägt dazu bei, die im Steuerzustand befindliche Ansteuereinheit 3, 4 zu überwachen.

Aber auch eine im Überwachungszustand befindliche Ansteuereinheit 3, 4 gibt entsprechende Steuersignale 3A, 4A aus, wobei aber die Aktivierungseinheit 5 mit ihrer jeweiligen Schalteinheit 8, 9 dafür sorgt, dass die von der im Überwachungszustand befindlichen Ansteuereinheit 3, 4 ausgegebenen Steuersignale nicht an den Aktuator 2 kommen. Nichtsdestotrotz arbeitet die im Überwachungszustand befindliche Ansteuereinheit 3, 4 genauso wie diejenige, die sich im Steuerzustand befindet.

Weiter erkennt man, dass der Aktuator 2 ein Zustandssignal 2A an jede der beiden Ansteuereinheiten 3, 4 sendet, sodass jede der beiden Ansteuereinheiten 3, 4 für sich genommen überprüfen kann, ob der Aktuator 2 in Übereinstimmung mit dem ausgegebenen Steuersignal 3A, 4A reagiert oder auf einen Fehlzustand zu schließen ist.

Diese Information wird dann an die Aktivierungseinheit 5 in Form eines Überwachungssignals 3B, 4B übermittelt, in dem im Wesentlichen die Information enthalten ist, wonach die jeweilige im Überwachungszustand befindliche Ansteuereinheit 3, 4 auf eine Fehlfunktion der im Steuerzustand befindlichen Ansteuereinheit 3, 4 schließt oder eben keine solche Fehlfunktion erkannt wird.

Darüber hinaus erkennt man auch die externe Quelle 7, welche ein Aktuator-Stellsignal an beide Ansteuereinheiten 3, 4 übermittelt. Dieses Aktuator-Stellsignal 7B ist dabei für beide Ansteuereinheiten 3, 4 identisch.

Weiter sendet die externe Quelle 7 auch ein Zuweisungssignal 7A an den Eingang 6 der Aktivierungseinheit 5, um zu Beginn eine initiale Zuweisung von Steuerzustand und Überwachungszustand an die beiden Ansteuereinheiten 3, 4 zuzuweisen und um danach auf eine durch die externe Quelle 7 wahrgenommene Fehlfunktion der im Steuerzustand befindlichen Ansteuereinheit 3, 4 hinzuweisen.

In der Figur 1 dargestellt sind zwei separate Leitungen zum Übermitteln des Zuweisungssignals 7A, wobei dies jedoch nicht notwendigerweise der Fall sein muss, sondern auch eine einzelne Leitung zum Übertragen des Zuweisungssignals 7A der externen Quelle 7 an den Signaleingang 6 der Aktivierungseinheit 5 ausreicht.

Dabei kommt es lediglich zu einem Entziehen des Steuerzustands, wenn sowohl die im Überwachungszustand befindliche Ansteuereinheit 3, 4 wie auch die externe Quelle 7 an die Aktivierungseinheit 5 signalisieren (über das Überwachungssignal 3B, 4B bzw. das Zuweisungssignal 7A), dass die im Steuerzustand befindliche Ansteuereinheit 3, 4 eine Fehlfunktion aufweist.

Eine unmittelbare Rückkopplung des Aktuators 2 an die externe Quelle 7, in der ein Zustandssignal des Aktuators 2 übersendet wird, ist vorliegend nicht eingezeichnet (jedoch natürlich möglich), da die externe Quelle 7 auch über andere Informationswege in Erfahrung bringen kann, ob der Aktuator 2 (nach Ansicht der externen Quelle 7) korrekt funktioniert.

Dient der Aktuator 2 beispielhaft zum Betätigen eines Seitenruders eines Flugzeugs, kann die externe Quelle 7 auf einen fehlerhaften Zustand der im Steuerzustand befindlichen Ansteuereinheit schließen, wenn die gewünschte vertikale Drehung des Flugzeugs nicht erfolgt ist, obwohl erfahrungsgemäß das hierfür an die Ansteuereinheiten 3, 4 gesendete Aktuator-Stellsignal 7B dafür ausreichen hätte müssen. Hierfür könnte die externe Quelle 7 auf ein Inertial-System, einen Kompass oder dergleichen für einen Abgleich zurückgreifen.

Detektieren sowohl die externe Quelle 7 wie auch die Ansteuereinheit 3, 4, die sich im Überwachungszustand befindet, einen Fehlerzustand der im Steuerzustand befindlichen Ansteuereinheit 3, 4, erfolgt ein Zustandswechsel derart, dass die vormals im Überwachungszustand befindliche Ansteuereinheit 3, 4 in den Steuerzustand und die Ansteuereinheit, der der Steuerzustand entzogen worden ist, in einen Fehlerzustand versetzt wird. Das Überwachungssignal einer Ansteuereinheit 3, 4, die im Fehlerzustand ist, wird durch die Aktivierungseinheit 5 nicht berücksichtigt.

Das Wechseln der Zustände der Ansteuereinheiten 3, 4 kann dabei mithilfe der von der Aktivierungseinheit 5 betätigbaren Schalteinheit 8, 9 umgesetzt werden, wobei einfach ein Schalter der in den Steuerzustand zu schaltenden Ansteuereinheit geschlossen und der Schalter der als fehlerhaft angesehenen Ansteuereinheit geöffnet wird, sodass die Steuersignale der als fehlerhaft agierend angesehenen Ansteuereinheit nicht mehr zum Aktuator 2 geführt werden.

Ist das System 100 Teil eines Luftfahrzeugs, so ist es besonders von Vorteil, wenn die externe Quelle 7 ein Flugsteuercomputer ist und der Aktuator dazu dient, eine Flugsteuerfläche oder das Flugzeugfahrwerk zu betätigen

Die externe Quelle 7 kann in einem solchen Fall dazu ausgelegt sein, auf eine Fehlfunktion des Aktuators zu schließen, wenn das an die Ansteuervorrichtung 1 gelieferte Aktuator-Stellsignal zu einer Reaktion des Luftfahrzeugs führt, die von der erwarteten Reaktion abweicht. Um die Reaktion des Luftfahrzeugs in Erfahrung zu bringen, wird vorzugsweise nicht auf ein Zustandssignal des Aktuators zurückgegriffen, sondern es reicht aus, andere Zustandsparameter des Luftfahrzeugs zu erfassen, welche mittelbar durch den Aktuator beeinflusst sind.

Durch die Erfindung ist eine Ansteuervorrichtung 1 sowie ein die Ansteuervorrichtung 1 umfassendes System 100 umsetzbar, das gegenüber vergleichbaren Ansteuervorrichtungen aus dem Stand der Technik geringere Kosten, ein geringeres Gewicht sowie weniger Bauteile und einen damit einhergehenden geringeren Energieverbrauch mit sich bringt.

### Bezugszeichenliste

- 1:: Ansteuervorrichtung
- 2:: Sicherheitskritischer Aktuator
- 2A:: Zustandssignal
- 3:: Erste Ansteuereinheit
- 3A:: Steuersignal der Ansteuereinheit 3
- 3B:: Überwachungssignal der Ansteuereinheit 3
- 4:: Zweite Ansteuereinheit
- 4A:: Steuersignal der Ansteuereinheit 4
- 4B:: Überwachungssignal der Ansteuereinheit 4
- 5:: Aktivierungseinheit
- 6:: Signaleingang
- 7:: Externe Quelle
- 7A:: Zuweisungssignal
- 7B:: Aktuator-Stellsignal/Zustandssignal
- 8:: Erste Schalteinheit
- 9:: Zweite Schalteinheit
- 100:: System

## Patentansprüche

1. Ansteuervorrichtung (1) für einen sicherheitskritischen Aktuator (2), umfassend:
eine erste Ansteuereinheit (3), die dazu ausgelegt ist, ein Steuersignal (3A) zum Ansteuern des Aktuators (2) und ein Überwachungssignal (3B) auf Grundlage von mindestens einem an die erste Ansteuereinheit (3) zurückgeführten Zustandssignal (2A) des Aktuators (2) auszugeben,
eine zweite Ansteuereinheit (4), die dazu ausgelegt ist, ein Steuersignal (4A) zum Ansteuern des Aktuators (2) und ein Überwachungssignal (4B) auf Grundlage von mindestens einem an die zweite Ansteuereinheit (4) zurückgeführten Zustandssignal (2A) des Aktuators (2) auszugeben, und
eine Aktivierungseinheit (5), die dazu ausgelegt ist, entweder die erste Ansteuereinheit (3) oder die zweite Ansteuereinheit (4) in einen Steuerzustand (CON), in dem das ausgegebene Steuersignal (3A, 4A) an den Aktuator (2) weitergereicht wird, und die andere Ansteuereinheit (3, 4) in einen Überwachungszustand (MON) zu versetzen, in dem das ausgegebene Steuersignal (3A, 4A) nicht an den Aktuator (2) weitergereicht wird, wobei
die Aktivierungseinheit (5) dazu ausgelegt ist, das Überwachungssignal (3B) der ersten Ansteuereinheit (3) und das Überwachungssignal (4B) der zweiten Ansteuereinheit (4) zu empfangen und auszuwerten, um in Abhängigkeit davon den Steuerzustand der ersten Ansteuereinheit (3) oder der zweiten Ansteuereinheit (4) zuzuweisen,
**dadurch gekennzeichnet, dass**
die Aktivierungseinheit (5) einen Signaleingang (6) zum Entgegennehmen von mindestens einem Zuweisungssignal (7A) mindestens einer externen Quelle (7) aufweist, wobei
die Aktivierungseinheit (5) dazu ausgelegt ist, den Steuerzustand von der im Steuerzustand befindlichen Ansteuereinheit (3, 4) auf die im Überwachungszustand befindliche Ansteuereinheit (3, 4) zu wechseln, wenn sowohl das Überwachungssignal (3B, 4B) der im Überwachungszustand befindlichen Ansteuereinheit (3, 4) als auch das Zuweisungssignal (7A) der externen Quelle (7) auf eine Fehlfunktion der im Steuerzustand befindlichen Ansteuereinheit (3, 4) hinweisen.

2. Vorrichtung (1) nach dem vorhergehenden Anspruch 1, wobei die erste Ansteuereinheit (3) und die zweite Ansteuereinheit (4) zueinander redundant ausgebildet sind, insbesondere zueinander inhomogen redundant oder homogen redundant ausgebildet sind, und/oder jeweils einen Signaleingang zum Entgegennehmen eines Aktuator-Stellsignals (7B) von der externen Quelle (7) aufweisen.

3. Vorrichtung (1) nach einem der vorhergehenden Ansprüche, wobei die Aktivierungseinheit (5) separat zu den beiden Ansteuereinheiten (3, 4) ausgebildet ist oder integriert in eine oder beide der Ansteuereinheiten (3, 4) ausgebildet sein kann.

4. Vorrichtung (1) nach einem der vorhergehenden Ansprüche, wobei die Aktivierungseinheit (5) dazu ausgelegt ist, in Abhängigkeit des Zuweisungssignals (7A) eine initiale Zuweisung von Steuerzustand und Überwachungszustand an die erste Ansteuereinheit (3) und die zweite Ansteuereinheit (4) auszuführen.

5. Vorrichtung (1) nach einem der vorhergehenden Ansprüche, wobei die Aktivierungseinheit (5) nach einem Wechsel des Steuerzustands von der im Steuerzustand befindlichen Ansteuereinheit (3, 4) auf die im Überwachungszustand befindliche Ansteuereinheit (3, 4), dazu ausgelegt ist, die Ansteuereinheit (3, 4), der der Steuerzustand entzogen worden ist, in einen Fehlerzustand (FAIL) zu versetzen, vorzugsweise wobei das Überwachungssignal (3B, 4B) einer im Fehlerzustand befindlichen Ansteuereinheit (3, 4) von der Aktivierungseinheit (5) keine Berücksichtigung beim Zuweisen des Steuerzustands findet.

6. Vorrichtung (1) nach einem der vorhergehenden Ansprüche, wobei die Aktivierungseinheit (5) eine erste Schalteinheit (8), die dazu ausgelegt ist, eine Signalverbindung zwischen der ersten Ansteuereinheit (3) und dem Aktuator (2) zu erstellen oder zu unterbrechen, und eine zweite Schalteinheit (9) aufweist, die dazu ausgelegt ist, eine Signalverbindung zwischen der zweiten Ansteuereinheit (4) und dem Aktuator (2) zu erstellen oder zu unterbrechen, insbesondere wobei die erste Schalteinheit (8) und die zweite Schalteinheit (9) jeweils als ein durch die Aktivierungseinheit (5) betätigbarer Schalter, Relais oder dergleichen ausgestaltet ist.

7. Vorrichtung (1) nach einem der vorhergehenden Ansprüche, wobei der sicherheitskritische Aktuator (2) ein Aktuator (2) in einem Luftfahrzeug ist, insbesondere ein Hochauftriebssystem, ein Aktuator (2) zum Stellen einer primären Flugsteuerungsfläche, ein Flugsteuerungselement oder ein Luftfahrzeugfahrwerk eines Luftfahrzeugs.

8. System (100) zum Ansteuern eines sicherheitskritischen Aktuators (2), umfassend:
eine Vorrichtung (1) nach einem der vorhergehenden Ansprüche, und
eine externe Quelle (7), die über den Signaleingang (6) mit der Aktivierungseinheit (5) gekoppelt ist, vorzugsweise wobei die externe Quelle (7) ein Steuercomputer ist.

9. System (100) nach dem vorhergehenden Anspruch 8, wobei die externe Quelle (7) dazu ausgelegt ist, ein Aktuator-Stellsignal (7B) zum Ansteuern des Aktuators (2) an die Vorrichtung (1) zu übertragen, vorzugsweise wobei sowohl die erste Ansteuereinheit (3) wie auch die zweite Ansteuereinheit (4) das identische Aktuator-Stellsignal (7B) zum Ausgeben eines darauf basierenden Steuersignals (3A, 4A) erhält.

10. System (100) nach einem der vorhergehenden Ansprüche 8 oder 9, wobei die externe Quelle (7) dazu ausgelegt ist, ein Zuweisungssignal (7A) über den Signaleingang (6) an die Aktivierungseinheit (5) zu senden, um der ersten Ansteuereinheit (3) und der zweiten Ansteuereinheit (4) den Steuerzustand (CON) bzw. den Überwachungszustand (MON) initial zuzuweisen.

11. System (100) nach einem der vorhergehenden Ansprüche 8-10, wobei die externe Quelle (7) dazu ausgelegt ist, über den Signaleingang (6) ein Zuweisungssignal (7A) an die Aktivierungseinheit (5) zu senden, das auf eine Fehlfunktion der im Steuerzustand befindlichen Ansteuereinheit (3, 4) hinweist.

12. System (100) nach einem der vorhergehenden Ansprüche 8-11, wobei die Aktivierungseinheit (5) dazu ausgelegt ist, nur dann den Steuerzustand von der im Steuerzustand befindlichen Ansteuereinheit (3, 4) auf die im Überwachungszustand befindliche Ansteuereinheit (3, 4) zu wechseln, wenn sowohl das Überwachungssignal (3B, 4B) der im Überwachungszustand befindlichen Ansteuereinheit (3, 4) als auch das Zuweisungssignal (7A) der externen Quelle (7) auf eine Fehlfunktion der im Steuerzustand befindlichen Ansteuereinheit (3, 4) hinweisen.

13. System (100) nach einem der vorhergehenden Ansprüche 8-12, wobei die externe Quelle (7) ein Flugsteuercomputer ist, der über einen Kommunikationsbus mit der Ansteuervorrichtung (1) gekoppelt ist.

14. System (100) nach einem der vorhergehenden Ansprüche 8-13, ferner umfassend einen Aktuator (2), der dazu ausgelegt ist, ein Steuersignal (3A, 4A) von einer im Steuerzustand befindlichen Ansteuereinheit (3, 4) zu erhalten und mindestens ein Zustandssignal (2A) an sowohl die erste Ansteuereinheit (3) wie auch die zweite Ansteuereinheit (4) zu senden.

15. Luftfahrzeug, insbesondere Flugzeug mit einer Vorrichtung (1) nach einem der vorhergehenden Ansprüche 1 bis 7 oder einem System (100) nach einem der vorhergehenden Ansprüche 8-14.
